# EUROPÄISCHE PATENTSCHRIFT

(11) **EP 1 393 982 B1**
(45) Veröffentlichungstag und Bekanntmachung des Hinweises auf die Patenterteilung: **13.04.2005**
(21) Anmeldenummer: 03016132.7
(22) Anmeldetag: 16.07.2003
(51) Int. Cl.: B60R 13/08, B29C 70/74, F02B 77/13, B29C 49/20

(54) **Schalldämpfendes Anbauteil für Kraftfahrzeuge**
Sound-damping accessory for vehicles
Accessoire d'isolation acoustique pour véhicules

(30) Priorität: 28.08.2002 DE 20213410 U
(43) Veröffentlichungstag der Anmeldung: 03.03.2004
(73) Patentinhaber: Carcoustics Tech Center GmbH, 51381 Leverkusen (DE)
(72) Erfinder: Brück, Eduard, 51381 Leverkusen (DE); Loof, Rolf, 53225 Bonn (DE); Klein, Heiko, 42699 Solingen-Merscheid (DE)
(74) Vertreter: COHAUSZ & FLORACK

(56) Entgegenhaltungen:
- DE-A- 10 001 932
- GB-A- 378 453
- GB-A- 2 106 612
- PATENT ABSTRACTS OF JAPAN vol. 2002, no. 05, 3. Mai 2002 (2002-05-03) -& JP 2002 029330 A (NOK VIBRACOUSTIC KK), 29. Januar 2002 (2002-01-29)

## Beschreibung

Die Erfindung betrifft ein körperschalldämpfendes Anbauteil für Kraftfahrzeuge, mit einem wenigstens partiell mit Dämpfungsmaterial gefüllten Hohlraum.

In Wandungen von Kraftfahrzeugen treten Biegeschwingungen auf, die durch Vibrationen von den im Fahrzeug angeordneten Motoren bzw. Antriebsaggregaten verursacht werden. Die Biegeschwingungen werden von der Wandung als Körperschall abgestrahlt.

Bislang wird von Kraftfahrzeugkarosserien abgestrahlter Körperschall dadurch gedämpft, dass bestimmte Innenflächen und Hohlräume der Karosserie mit Entdröhnmatten aus Bitumen oder bituminösen Spritzmassen beschichtet werden. Die körperschalldämpfenden Materialien werden dabei in der Regel wenig gezielt eingesetzt, so dass meist eine unnötige hohe Masse eingebracht wird. Darüber hinaus stellt das Aufbringen dieser Materialien eine aufwendige Arbeit dar, die üblicherweise manuell durchgeführt wird und nur schwierig in den übrigen Arbeitsablauf der Montage integriert werden kann. Außerdem nehmen die bislang verwendeten Spritzmassen und Entdröhnmatten Bauraum in Anspruch, der bei einem Entfall dieser Materialien anders genutzt werden könnte.

Die gattungsbildende GB 378, 453 A offenbart eine körperschalldämpfende Konstruktion für Fahrzeugkarosserien, bei der an einer oder mehreren Karosserieflächen, z.B. an einer Stirnwand, ein schwingungsdämpfendes Material angebracht ist, das durch eine oder mehrere Halteplatten in Position gehalten wird. In der Karosseriefläche und/oder in der Halteplatte sind eine oder mehrere Vertiefungen eingepresst, um darin das schwingungsdämpfende Material aufzunehmen. Bei dem schwingungsdämpfenden Material kann es sich insbesondere um Gummi handeln. In der Halteplatte sind eine oder mehrere Öffnungen vorgesehen, die mit entsprechenden Öffnungen im zugeordneten schwingungsdämpfenden Material sowie Öffnungen in der benachbarten Karosseriefläche fluchten und jeweils von einer Öse durchdrungen sind, deren Enden flanschartig umgebogen sind und an der Karosseriefläche und der Halteplatte anliegen. Die mit der Öse versehene Öffnung dient offenbar der Durchleitung von Kabeln und/oder Schlauchleitungen im Bereich der Halteplatte.

Aus der DE 100 01 932 A1 ist eine schalldämpfende Unterbodenverkleidung zur Abschirmung des Motors und Teilen der Abgasanlage eines Kraftfahrzeugs bekannt. Die Verkleidung ist ein plattenförmiges, selbsttragend steifes Bauteil aus thermoplastischem Kunststoff, das teilweise als Hohlkörper ausgebildet ist, der wenigstens teilweise eine schallabsorbierende Füllung aus geschäumtem thermoplastischem Kunststoff enthält. Diese Unterbodenverkleidung, die neben der Absorption von vom Motor und der Abgasanlage ausgehenden Geräuschemissionen gleichzeitig auch der Cw-Wert-Verbesserung eines Kraftfahrzeuges dient, hat allerdings keine körperschalldämpfende Funktion.

Der vorliegenden Erfindung liegt die Aufgabe zugrunde, eine verbesserte Körperschalldämpfung für Kraftfahrzeuge anzugeben, durch welche die vorstehend genannten Nachteile der bislang praktizierten Körperschalldämpfung weitestgehend vermieden werden.

Erfindungsgemäß wird diese Aufgabe durch ein Anbauelement gelöst, das im wesentlichen die im Anspruch 1 angegebenen Merkmale aufweist.

Nach der Erfindung wird die Funktion der Körperschalldämpfung (Entdröhnung) somit von einem anderen Bauteil, nämlich dem erfindungsgemäßen Anbaüteil übernommen. Das erfindungsgemäße Anbauelement besitzt hierzu einen wenigstens partiell mit geeignetem Dämpfungsmaterial gefüllten Hohlraum und mindestens eine im wesentlichen starr ausgebildete, der Anbindung am Kraftfahrzeug dienende Anbindungsstelle, wobei das Dämpfungsmaterial, welches z.B. aus Butyl-Kautschuk oder einem anderen gummielastischen Material bestehen kann, im Bereich der Anbindungsstelle angeordnet ist.

Eine den Cw-Wert eines Fahrzeuges reduzierende Bodenverkleidung stellt inzwischen ein Standardbauteil im Automobilbau dar. Das erfindungsgemäße Anbauteil kann daher insbesondere als aerodynamisch günstig geformte Unterbodenverkleidung ausgebildet sein.

Die Erfindung bietet folgende Vorteile:
- Entfall oder zumindest Reduzierung des bisher zur Körperschalldämpfung verwendeten Entdröhnmaterials in Bezug auf am Fahrzeugboden montierte Anbauteile
- Entfall bzw. Reduzierung des für die Entdröhnung erforderlichen Montageaufwandes
- Reduzierter Materialverbrauch aufgrund gezielten Materialeinsatzes
- Reduzierung der Anzahl von Bauteilen
- Kosteneinsparung
- Gewichtseinsparung

Der mit Dämpfungsmaterial gefüllte Hohlraum des erfindungsgemäßen Anbauteils wird so gestaltet, dass das sich aus Fläche und Dicke ergebende Volumen des Dämpfungsmaterials einen optimalen Kompromiss hinsichtlich der geforderten Entdröhnwirkung darstellt.

Nach einer vorteilhaften Ausgestaltung der Erfindung ist an mindestens einem der beiden Wandungsabschnitte, welche den mit Dämpfungsmaterial gefüllten Hohlraum begrenzen, ein ringförmiger Vorsprung ausgebildet, der den anderen Wandungsabschnitt berührt und den Umfang bzw. die Fläche des Hohlraums definiert.

Eine weitere bevorzugte Ausgestaltung der Erfindung besteht darin, dass die Anbindungsstelle des Anbauteils als kegelstumpfförmige und/oder topfförmige Erhebung ausgebildet ist.

Eine gute Körperschalldämpfung lässt sich insbesondere dann erzielen, wenn das Dämpfungsmaterial einen ringscheibenförmig ausgebildeten Hohlraum des Anbauteils ausfüllt und dabei die Anbindungsstelle konzentrisch umgibt. Es sind jedoch auch Anwendungsfälle möglich, bei denen es vorteilhaft ist, wenn das Dämpfungsmaterial im Anbauteil kreisflächig, oval oder polygonal, oder insbesondere asymmetrisch ausgebildet ist.

Weitere bevorzugte und vorteilhafte Ausgestaltungen der Erfindung sind den Unteransprüchen zu entnehmen.

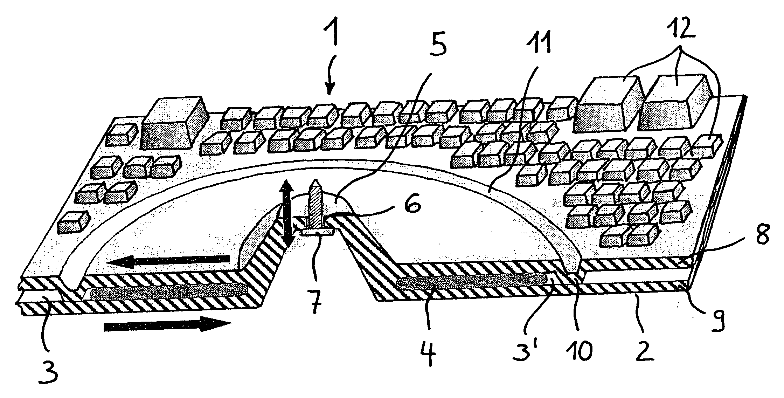

Nachfolgend wird die Erfindung anhand einer ein Ausführungsbeispiel darstellenden Zeichnung näher erläutert. Die einzige Figur zeigt eine perspektivische Darstellung eines Abschnitts eines erfindungsgemäßen Anbauteils 1, bei dem es sich vorzugsweise um eine selbsttragend steife, aus Kunststoff hergestellte Unterbodenverkleidung handelt, die insbesondere der Reduzierung des Luftwiderstandsbeiwertes eines Kraftfahrzeuges dient. Die Unterseite 2 des hier teilweise geschnitten dargestellten Anbauteils 1 ist dementsprechend im wesentlichen glatt ausgebildet.

Zudem übernimmt das Anbauteil die Funktion einer Körperschalldämpfung (Entdröhnung). Hierzu ist das Anbauteil doppelwandig ausgeführt, wobei der Hohlraum in bestimmten Bereichen mit einem geeigneten Dämpfungsmaterial gefüllt ist. Das Dämpfungsmaterial besteht vorzugsweise aus Kautschuk, z.B. aus Butyl-Kautschuk, und/oder einem anderen gummielastischen oder viskoelastischen Material. Es weist einen hohen inneren Verlustfaktor auf. Die durch Vibrationen des Kraftfahrzeugmotors im Karosseriebodenblech hervorgerufene Schwingungsenergie wird durch die Scherspannung, die bei einer Schwingung in den Grenzschichten zwischen der Wandung des Anbauteils 1 und dem Dämpfungsmaterial 4 erzeugt wird, vernichtet. Die Schwingungsrichtung des nicht dargestellten Boden- bzw. Karosserieblechs ist durch den Doppelpfeil angedeutet. Die zur Energievernichtung führende Scherspannung ist durch die beiden in entgegengesetzte Richtungen weisenden Pfeile oberhalb bzw. unterhalb des Dämpfungsmaterials 4 angedeutet.

Zur Anbindung des Anbauteils 1 an die Fahrzeugkarosserie sind im wesentlichen starr ausgebildete Anbindungsstellen 5 vorgesehen, wobei das Dämpfungsmaterial 4 nahe der jeweiligen Anbindungsstelle angeordnet ist. Die Lage der Anbindungsstellen 5 am Anbauteil 1 ist so gewählt, dass sie jeweils im Bereich hoher, vorzugsweise der höchsten Modendichte des zu dämpfenden Körperschalls angeordnet sind.

In dem dargestellten Ausführungsbeispiel ist die Anbindungsstelle 5 als kegelstumpf- bzw. topfförmige Erhebung domartig ausgebildet. Die Domhöhe hängt vom Profil des Fahrzeugbodens bzw. Anbauortes ab und ist beliebig gestaltbar. Die starre Anbindung des Anbauteils 1 erfolgt vorzugsweise im wesentlichen punktförmig im Zentrum der Mode. Hierzu ist an der Anbindungsstelle 5 beispielsweise ein Befestigungsloch 6 ausgebildet, in das der Schaft einer Schraube 7 oder ein anderes Befestigungsmittel gesteckt werden kann. Das Anbauteil 1 kann auf diese Weise fest und starr mit dem Boden- bzw. Karosserieblech verbunden werden.

Der Hohlraum 3 des doppelwandigen, aus Kunststoff hergestellten Anbauteiles 1 ist in mehrere Hohlräume bzw. Hohlkammern unterteilt. Im Bereich der jeweiligen Anbindungsstelle 5 ist der Hohlraum 3 durch die beiden voneinander beabstandeten, im wesentlichen parallel zueinander verlaufenden Wandungsabschnitte 8, 9 begrenzt, wobei am oberen Wandungsabschnitt 8 ein ringförmiger Vorsprung 10 ausgebildet ist, der den unteren Wandungsabschnitt 9 berührt und den Umfang des somit ringförmigen Hohlraums 3' definiert. In dem dargestellten Ausführungsbeispiel ist der im wesentlichen kreisringförmige Vorsprung 10 durch eine entsprechende Ringnut 11 gebildet. Das die Anbindungsstelle konzentrisch umgebende Dämpfungsmaterial 4 füllt den relativ flachen, ringscheibenförmigen Hohlraum 3' nahezu vollständig aus. Die radiale Breite des Dämpfungsmaterial 4 beträgt ein Vielfaches seiner durch den Abstand der Wandungsabschnitte 8, 9 bestimmten Dicke. Vorzugsweise beträgt die radiale Breite des Dämpfungsmaterial 4 mehr als das Zehnfache seiner Dicke.

Neben der Funktion der Körperschalldämpfung (Entdröhnung) kann das Anbauteil 1 auch noch die Funktion einer Luftschallabsorption (Luftschalldämpfung) übernehmen. Hierzu sind im oberen Wandungsabschnitt 8 eine Vielzahl von kästchen- bzw. becherartigen Hohlkammern 12 ausgebildet. Die luftgefüllten Hohlkammern 12 weisen unterschiedliche Größen (Durchmesser) sowie unterschiedliche Höhen auf.

Zur Herstellung des erfindungsgemäßen Anbauteils 1 bietet sich insbesondere die Extrusions-Blasformtechnik an. Es können aber auch andere Herstellungsverfahren, die den gleichen konstruktiven Aufbau des Anbauteils 1 ermöglichen, angewandt werden.

Bei dem erfindungsgemäßen Anbauteil kann es sich nicht nur um eine aerodynamisch günstig geformte Unterbodenverkleidung handeln. Ebenso lässt sich das erfindungsgemäße Prinzip auch bei weiteren Kraftfahrzeug-Anbauteilen realisieren.

### Bezugszeichenliste

- 1: Anbauteil
- 2: Unterseite
- 3: Hohlraum
- 3': Dämpfungsmasse enthaltender Hohlraum
- 4: Dämpfungsmasse
- 5: Anbindungsstelle
- 6: Befestigungsloch
- 7: Schraube
- 8: oberer Wandungsabschnitt
- 9: unterer Wandungsabschnitt
- 10: ringförmiger Vorsprung
- 11: Ringnut
- 12: becherförmige Hohlkammern

## Patentansprüche

1. Körperschalldämpfendes Anbauteil (1) für Kraftfahrzeuge, mit einem wenigstens partiell mit Dämpfungsmaterial (4) gefüllten Hohlraum (3') und mindestens einer im wesentlichen starr ausgebildeten Anbindungsstelle (5) zur Anbindung des Anbauteils (1) an ein Boden- oder Karosserieblech des Kraftfahrzeuges, wobei das Dämpfungsmaterial (4) aus Kautschuk und/oder einem anderen gummielastischen Material gebildet und nahe der Anbindungsstelle (5) angeordnet ist,
**dadurch gekennzeichnet, dass** der Hohlraum (3') durch zwei zueinander beabstandete Wandungsabschnitte (8, 9) des Anbauteils (1) begrenzt ist, wobei das Dämpfungsmaterial (4) die Anbindungsstelle (5) umgibt und die Anbindungsstelle (5) domartig ausgebildet ist.

2. Anbauteil nach Anspruch 1,
**dadurch gekennzeichnet, dass**
es als Verkleidungsteil für die Unterseite eines Kraftfahrzeuges, insbesondere als Unterbodenverkleidung ausgebildet ist.

3. Anbauteil nach Anspruch 1 oder 2,
**dadurch gekennzeichnet, dass**
die Anbindungsstelle (5) als topfförmige und/oder kegelstumpfförmige Erhebung ausgebildet ist.

4. Anbauteil nach einem der Ansprüche 1 bis 3,
**dadurch gekennzeichnet, dass**
an der Anbindungsstelle (5) ein Befestigungsloch (6) ausgebildet ist.

5. Anbauteil nach einem der Ansprüche 1 bis 4,
**dadurch gekennzeichnet, dass**
das Dämpfungsmaterial (4) ringförmig, kreisflächig oder oval ausgebildet ist.

6. Anbauteil nach einem der Ansprüche 1 bis 5,
**dadurch gekennzeichnet, dass**
das Dämpfungsmaterial (4) die Anbindungsstelle (5) konzentrisch umgibt.

7. Anbauteil nach einem der Ansprüche 1 bis 6,
**dadurch gekennzeichnet, dass**
das Dämpfungsmaterial (4) in einem ringscheibenförmig ausgebildeten Hohlraum (3') angeordnet ist.

8. Anbauteil nach einem der Ansprüche 1 bis 7,
**dadurch gekennzeichnet, dass**
an mindestens einem (8) der beiden Wandungsabschnitte des Anbauteils (1) ein ringförmiger Vorsprung (10) ausgebildet ist, der den anderen Wandungsabschnitt (9) berührt und den Umfang des Hohlraums (3') definiert.

9. Anbauteil nach einem der Ansprüche 1 bis 8,
**dadurch gekennzeichnet, dass**
es doppelwandig ausgebildet ist.

10. Anbauteil nach einem der Ansprüche 1 bis 9,
**dadurch gekennzeichnet, dass**
**dadurch gekennzeichnet, dass** es eine im wesentlichen glatte Unterseite (2) aufweist.

11. Anbauteil nach einem der Ansprüche 1 bis 10,
**dadurch gekennzeichnet, dass** es einen Formteilabschnitt (8) mit einer Vielzahl von kästchen- oder becherartig ausgebildeten Hohlkammern (12) aufweist.

12. Anbauteil nach einem der Ansprüche 1 bis 11,
**dadurch gekennzeichnet, dass** es durch Extrusionsblasformen hergestellt ist.

## Claims

1. An impact sound damping add-on part (1) for automotive vehicles, said add-on part having a cavity (3') at least partially filled with a damping material (4) and at least one attachment location (5) that is configured to be substantially rigid for attaching the add-on part (1) to a floor panel or a body sheet of the automotive vehicle, said damping material (4) being made from rubber and/or from another rubber-elastic material and being disposed in proximity to said attachment location (5),
**characterized in that** the cavity (3') is bounded by two spaced-apart wall sections (8, 9) of the add-on part (1), the damping material (4) surrounding the attachment location (5) and said attachment location (5) being configured as a dome.

2. The add-on part according to claim 1,
**characterized in that** it is configured as a trim panel for the underside of an automotive vehicle, in particular as an underbody panel.

3. The add-on part according to claim 1 or 2,
**characterized in that** the attachment location (5) is configured as a cup-shaped and/or truncated projection.

4. The add-on part according to any of the claims 1 through 3,
**characterized in that** a fastener hole (6) is formed at the attachment location (5).

5. The add-on part according to any of the claims 1 through 4,
**characterized in that** the damping material (4) is configured as an annular or oval shape or to have a circular surface.

6. The add-on part according to any of the claims 1 through 5,
**characterized in that** the damping material (4) concentrically surrounds the attachment location (5).

7. The add-on part according to any of the claims 1 through 6,
**characterized in that** the damping material (4) is disposed in a cavity (3') that is configured in the shape of an annular disk.

8. The add-on part according to any of the claims 1 through 7,
**characterized in that** at one (8) of the two wall sections of the add-on part (1) at least there is formed an annular projection (10) that contacts the other wall section (9) and defines the size of the cavity (3').

9. The add-on part according to any of the claims 1 through 8,
**characterized in that** it has a double-walled configuration.

10. The add-on part according to any of the claims 1 through 9,
**characterized in that** it comprises a substantially smooth underside (2).

11. The add-on part according to any of the claims 1 through 10,
**characterized in that** it comprises a molded part portion (8) with a plurality of hollow chambers (12) each configured in the shape of a box or a cup.

12. The add-on part according to any of the claims 1 through 11,
**characterized in that** it is made by extrusion blow molding.

## Revendications

1. Pièce portée (1) pour véhicule automobile atténuant la transmission des bruits dans les corps solides du type comportant une cavité (3') remplie du moins en partie d'un matériau amortisseur (4) et au moins un point d'attache (5) sensiblement rigide pour attacher la pièce portée (1) à la tôle du dessous de caisse ou de la carrosserie du véhicule automobile, le matériau amortisseur (4) étant réalisé en caoutchouc et/ou en un autre matériau élastique comme de caoutchouc et étant disposé à proximité du point d'attache (5),
**caractérisée en ce que** la cavité (3') est délimitée par deux parties de paroi (8, 9) de la pièce portée (1), le matériau amortisseur (4) entourant le point d'attache (5) et le point d'attache (5) étant conformé en forme de dôme.

2. Pièce portée selon la revendication 1,
**caractérisée en ce qu'**elle est réalisée sous forme de pièce de revêtement pour le dessous d'un véhicule automobile, notamment sous forme de revêtement pour dessous de caisse.

3. Pièce portée selon la revendication 1 ou 2,
**caractérisée en ce que** le point d'attache (5) est réalisé sous forme de proéminence en forme de pot et/ou tronconique.

4. Pièce portée selon l'une quelconque des revendications 1 à 3,
**caractérisée en ce qu'**un trou de fixation (6) est formé sur le point d'attache (5).

5. Pièce portée selon l'une quelconque des revendications 1 à 4,
**caractérisée en ce que** le matériau amortisseur (4) est annulaire, ovale ou présente une surface circulaire.

6. Pièce portée selon l'une quelconque des revendications 1 à 5,
**caractérisée en ce que** le matériau amortisseur (4) est disposé de manière concentrique autour du point d'attache (5).

7. Pièce portée selon l'une quelconque des revendications 1 à 6,
**caractérisée en ce que** le matériau amortisseur (4) est disposé dans une cavité (3') conformée en forme de disque annulaire.

8. Pièce portée selon l'une quelconque des revendications 1 à 7,
**caractérisée en ce que** sur au moins une (8) des deux parties de paroi de la pièce portée (1) est formée une proéminence annulaire (10) qui est en contact avec l'autre partie de paroi (9) et définit l'étendue de la cavité (3').

9. Pièce portée selon l'une quelconque des revendications 1 à 8,
**caractérisée en ce qu'**elle présente une double paroi.

10. Pièce portée selon l'une quelconque des revendications 1 à 9,
**caractérisée en ce qu'**elle comporte une face inférieure (2) sensiblement lisse.

11. Pièce portée selon l'une quelconque des revendications 1 à 10,
**caractérisée en ce qu'**elle comporte une partie de pièce moulée (8) présentant une pluralité de chambres creuses (12) conformées en forme de petits compartiments ou de godets.

12. Pièce portée selon l'une quelconque des revendications 1 à 11,
**caractérisée en ce qu'**elle est réalisée par extrusion soufflage.
